# NEW EUROPEAN PATENT SPECIFICATION

(11) **EP 0 822 115 B2**
(45) Date of publication and mention of the opposition decision: **17.05.2006**
(45) Mention of the grant of the patent: 18.12.2002
(21) Application number: 97305649.2
(22) Date of filing: 28.07.1997
(51) Int. Cl.: B60N 2/28

(54) **Child safety seat**
Kindersicherheitssitz
Siège de sécurité pour enfants

(30) Priority: 02.08.1996 GB 9616280; 16.08.1996 GB 9617192
(43) Date of publication of application: 04.02.1998
(73) Proprietor: BRITAX RÖMER Kindersicherheit GmbH, D-89024 Ulm (DE)
(72) Inventor: Wetter, Hermann, 89075 Ulm (DE); Stysch, Christian, 89073 Ulm (DE)
(74) Representative: Suèr, Steven Johannes

(56) References cited:
- EP-A- 0 200 411
- EP-A- 0 504 618
- WO-A-90/02666
- DE-A- 19 510 512

## Description

This invention relates to a child safety seat for use in a vehicle, comprising a base member adapted to rest on a vehicle seat, a seat assembly mounted on the base member, and first and second guide means on the child seat defining a strap path for a strap of a vehicle seat belt to secure the child seat to a vehicle seat.

DE-A-195 10 512 discloses a child safety seat of this type. This seat has the disadvantage that, even if the vehicle seat belt is pulled very tight during installation, the resilience of both the vehicle seat and the vehicle seat belt will permit undesirable movement of the child seat relative to the vehicle in the event of sudden deceleration, for example during an accident.

EP-A-0 232 334 discloses a child safety seat fixing. This has a frame fixed to the vehicle seat by the existing passenger seat belt's lap and diagonal straps. The frame is equipped with one or more clamps which engage with the straps after the buckle has been fastened. One of the clamps is fitted to a cross-piece at the bottom of the safely seat frame, while other are connected to uprights to allow fixing to a diagonal strap from either side. However, if a strap of the seat belt is positioned so as to extend across the ribs and the pivoting member then is moved to its closed position, the strap is prevented from moving relative to the clamp. The resulting deflection of the strap has minimal effect on the length of its path through the clamp and is certainly insufficient to have any significant tightening effect.

According to the invention there is provided a child safety seat for use in a vehicle, comprising a base member adapted to rest on a vehicle seat, a seat assembly mounted on the base member, and first and second guide means on the child seat defining a strap path for a strap of a vehicle seat belt to secure the child seat to a vehicle seat, characterised by strap deflecting means mounted on the base member for movement between a first position clear of said strap path between said first and second guide means and a second position in which a strap following said strap path is deflected therefrom, thereby to tighten said strap, and manually engageable latch means for holding the strap deflecting means in its second position, the strap deflecting means being movable separately from at least part of the seat assembly.

Preferably, the base member has an upstanding rear portion adapted to abut against the backrest of a vehicle seat. The guide means may comprise a vertically extending edge either on the upwardly extending part of the base member, or on a corresponding upwardly extending part of an intermediate member, the relative positions of the strap deflecting means and said edge being variable between a configuration in which the strap deflecting means is clear of a direct path past said edge and a configuration in which it obstructs said direct path.

Alternatively, in a seat of the type in which the seat assembly is detachably mounted on the base member and the strap deflecting means is movable between its first and second positions prior to mounting the seat body on the base member.

The strap deflecting means may be positioned so that angular movement of the seat assembly relative to the base member causes movement of the strap deflecting means between a first position clear of said strap path and a second position in which a strap following said strap path is deflected therefrom, thereby tightening said strap.

Preferably, the seat assembly comprises an intermediate member which includes the strap deflecting means, and a seat body which is mounted on the intermediate member for angular movement relative thereto. This arrangement enables the orientation of the seat body relative to the vehicle seat to be adjusted after the adult seat belt has been tightened by the strap deflecting means. Such adjustment serves two purposes. Firstly, it enables the child seat body to be set at the same orientation relative to the ground on a variety of different types of vehicle seat. Secondly, within any one vehicle, it enables the seat body to be moved between an upright position and a reclined position.

Embodiments of the invention will now be described, by way of example, with reference to the accompanying drawings, in which:
Figure 1 is a side view of a child safety seat in accordance with a first embodiment of the invention, with the intermediate member in a position prior to tightening the vehicle seat belt;
Figure 2 is a plan view of the seat shown in Figure 1;
Figure 3 is a side view of the seat shown in Figure 1 but in the position after tightening the vehicle seat belt;
Figure 4 is a plan view of the seat shown in Figure 3;
Figure 5 is a side view of a child safety seat in accordance with a second embodiment of the invention, with the intermediate member in a position prior to tightening the vehicle seat belt;
Figure 6 is a plan view of the seat shown in Figure 5;
Figure 7 is a side view of the seat shown in Figure 5 but in the position after tightening the vehicle seat belt;
Figure 8 is a plan view of the seat shown in Figure 7.
Figure 9 is a perspective view of a base member of a child safety seat in accordance with a third embodiment of the invention;
Figure 10 is a schematic side view showing the base member of Figure 9 in the course of being installed on a vehicle seat;
Figure 11 is a schematic side view similar to Figure 10, showing the base member fully installed on the vehicle seat and a seat assembly about to be installed on the base member;
Figure 12 is a schematic side view of the child safety seat shown in Figure 11, showing the seat assembly installed on the base member in a position suitable for use by a newborn child;
Figure 13 is a schematic side view similar to Figure 12 but showing the seat assembly installed in a position suitable for use by a child of approximately nine months of age; and
Figure 14 is a schematic side view similar to Figures 12 and 13 but showing the seat assembly installed in a position suitable for use by a child of approximately eighteen months of age.

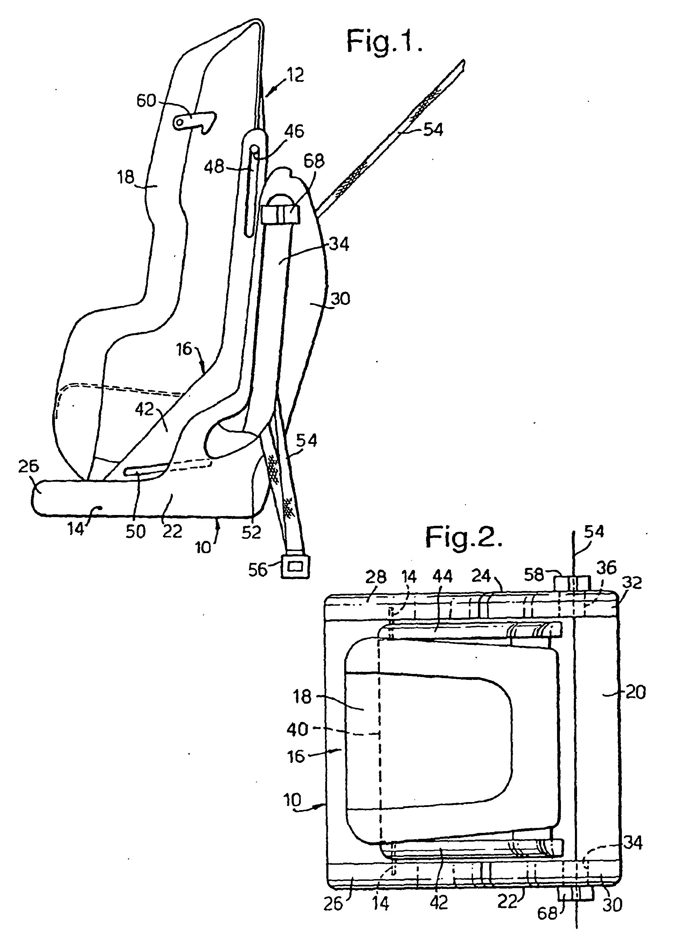

Referring to Figures 1 and 2, a child safety seat comprises a base member 10 and a seat assembly 12 which is coupled to the base member 10 by a pivot axle 14. The seat assembly 12 comprises an intermediate member 16, through which the axle 14 extends, and a seat body 18.

The base member 10 consists of a central horizontal portion 20 extending below the intermediate member 16 and two L-shaped side portions 22 and 24, extending upwardly from opposite sides of the central portion 20, with the intermediate member 16 located therebetween. The pivot axle 14 is joumalled in forwardly extending limbs 26 and 28 of the side portions 22 and 24. Upwardly extending limbs 30 and 32 of the side portions 22 and 24 contain respective elongate openings 34 and 36.

The intermediate member 16 is similar to the base member in that it has a base portion 40 extending under the seat body 18 and L-shaped side portions 42 and 44 extending upwardly between the sides of the seat body 18 and the L-shaped side portions 22 and 24 of the base member 10.

The seat body 18 is coupled to the intermediate member 16 by pins 46, which engage in respective slots 48 in the vertically extending limbs of the L-shaped side portions 42 and 44, and similar pins which engage in slots 50 in the horizontal limbs of the L-shaped side portions 42 and 44. This arrangement, which allows the orientation of the seat body 18 to be changed relative to that of the intermediate member 16, is as described in EP-A-0325352 and will not be described in detail.

In use, the child seat is positioned on a vehicle seat so that the central portion 20 of the base member 10 rests on the seat cushion and the upwardly extending limbs 30 and 32 abut against the backrest. Next, the lap portion 52 and the diagonal portion 54 of an adult seat belt for the vehicle seat are threaded through the elongate openings 34 and 36, and then secured to the corresponding adult seat belt buckle 56. Where it passes through the slot 36, the shoulder belt 54 is secured by a belt locking device 58 which prevents movement of the belt therethrough towards the buckle 56, thereby preventing more of the shoulder strap 54 from being fed past the buckle 56 to slacken the lap belt 52.

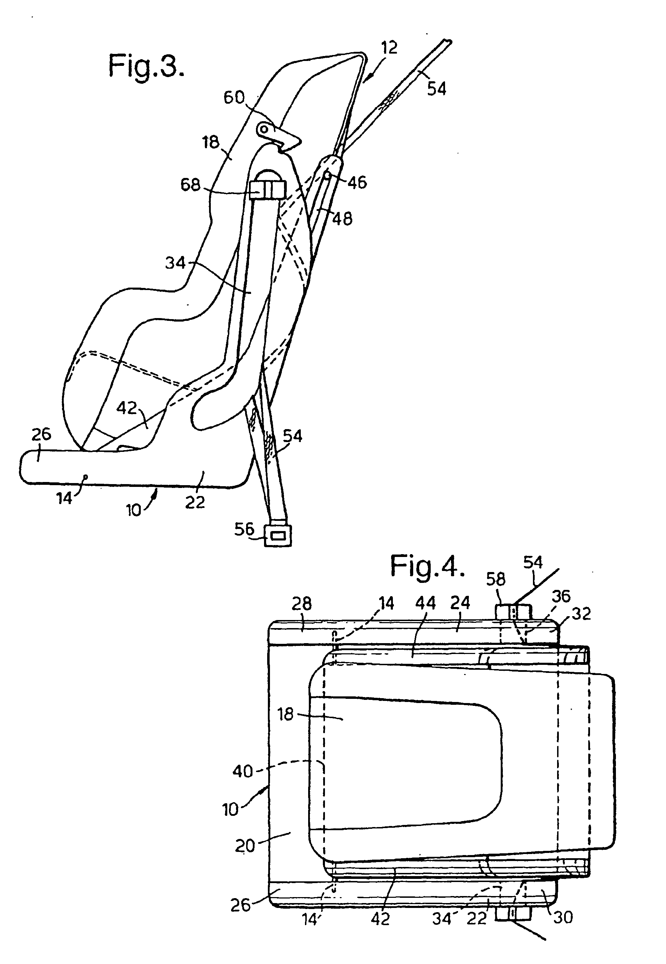

After the seat belt buckle 56 has been fastened, the intermediate member 16 and the seat body 18 are simultaneously tilted rearwardly to the position shown in Figures 3 and 4, in which the rear edges of the side members 42 and 44 are located behind the elongate openings 34 and 36, thus deflecting both the lap and shoulder belts 52 and 54 rearwardly from their previous straight path between the openings 34 and 36, thereby tightening the vehicle seat belt 52, 54. The intermediate member 16 is secured in the position shown in Figures 3 and 4 by a spring loaded catch 60.

The locking device 58 may be as described in EP-A-0200411. A corresponding locking device 68 is provided on the upwardly extending limb 30 on the opposite side of the seat for use when the child seat is to be installed on a vehicle seat in which the shoulder anchorage for the vehicle seat belt is on the opposite side.

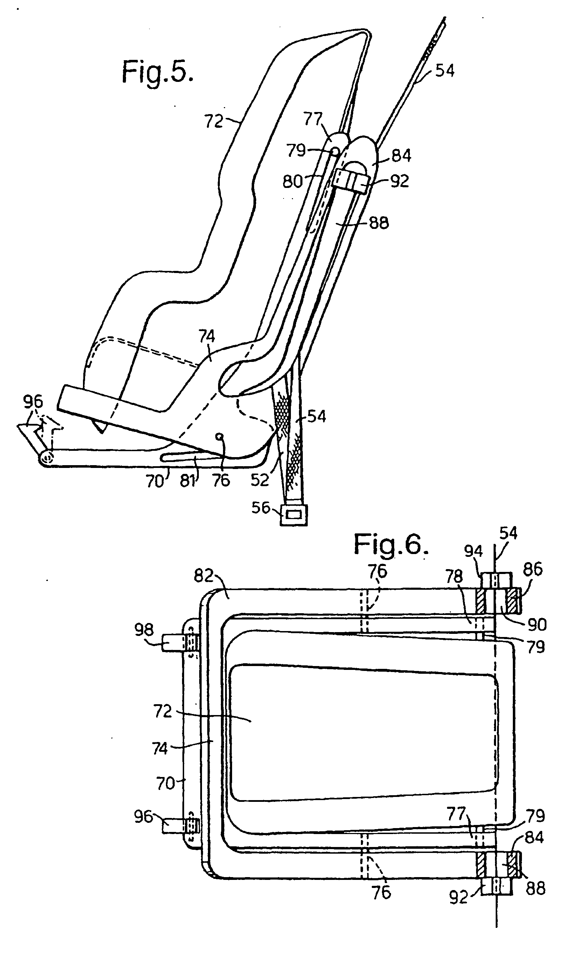

Figures 5 and 6 show an alternative child safety seat comprising a base member 70, together with a seat body 72 and a belt tensioning member 74, which is coupled to the base member 70 by a pivot axle 76.

The base member 70 has a respective upstanding limb 77, 78 projecting upwardly from each of its rear corners in directions substantially parallel to the back of the seat body 72 when the latter is in its most upright position, as illustrated in Figure 5. The lower parts of the limbs 77 and 78 carry bearings for the pivot axle 76. The seat body 72 is coupled to the base member 70 by pins 79, which engage in respective slots 80 in the upper parts of the limbs 77, 78, and similar pins which engage in slots 81 in the lower parts of the limbs 77, 78, similar to the pins 46 and slots 48 and 50 coupling the seat body 18 to the intermediate member 16 in Figures 1 to 4.

The tensioning member 74 has a generally U-shaped base portion 82, the side arms of which are journalled on the ends of the pivot axle 76. A respective tensioning limb 84, 86 extends upwardly from each of the side arms of the U-shaped base portion 82 and each contains a respective elongate opening 88, 90, which has a respective locking device 92, 94 mounted at its upper end. The locking devices 92 and 94 are similar to the locking devices 58 and 68 of Figures 1 to 4.

In use, the child seat is placed on a vehicle seat so that the base member 70 rests on the seat cushion and the upwardly extending limbs 84 and 86 of the tensioning member 74 abut against the backrest. Next, the lap portion 52 and the diagonal portion 54 of an adult seat belt for the vehicle seat are threaded through the elongate openings 88 and 90 and then secured to the corresponding adult seat belt buckle 56. Where it passes through the slot 90, the shoulder belt 54 is secured by the belt locking device 94 so as to prevent more of the shoulder strap 54 from being fed passed the buckle 56 to slacken the lap belt 52.

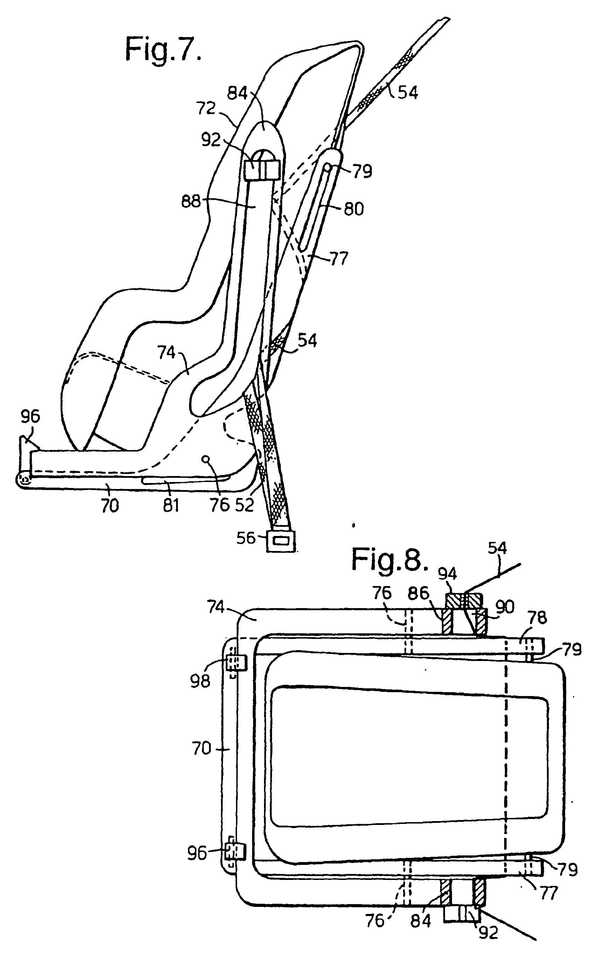

After the seat belt buckle 56 has been fastened, the front edge of the tensioning member 74 is pulled downwardly so as to engage with spring loaded catches 96 and 98 on the front edge of the base member 70, as shown in Figures 7 and 8. This movement can be effected by pushing rearwardly on the top of the seat body 72. The slots 88 and 90 in the tensioning member 74 are now in front of the rear edge of the limbs 77 and 78, thus deflecting both the lap and shoulder belts 52 and 54 forwardly from their previous straight path between the two openings 88 and 90, thereby tightening the vehicle seat belt 52, 54.

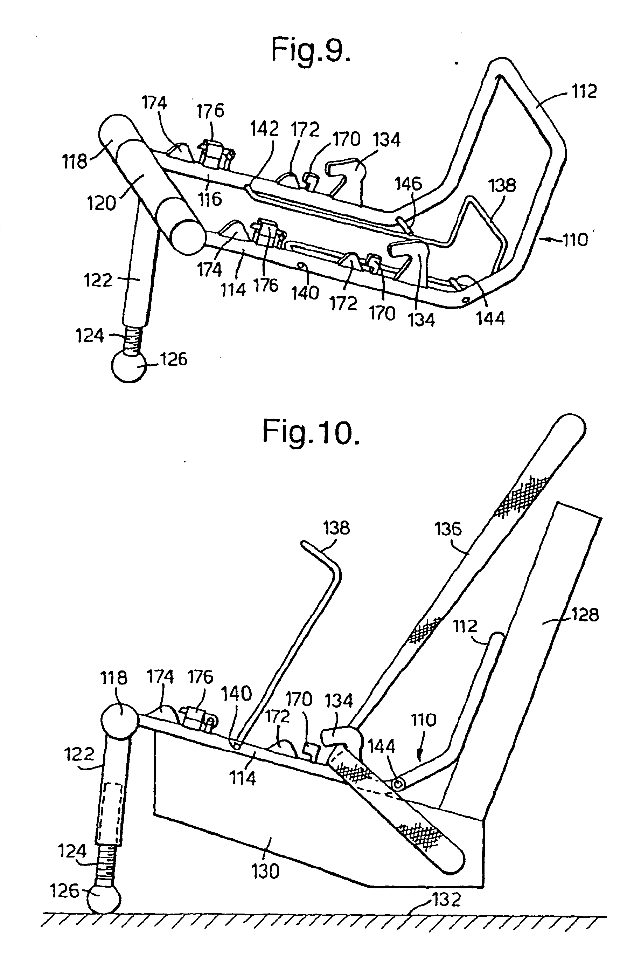

Referring to Figures 9 and 10, the base member 110 of another child safety seat in accordance with the invention comprises a U-shaped tubular member having its side limbs bent through approximately 85° at an intermediate point along their length so as to provide a central portion 112 at approximately 85° to the limb end portions 114 and 116. The end portions 114 and 116 are interconnected by a transverse member 118 having a central portion 120 which is constructed so as to be rotatable relative to the end portions 114 and 116 which has one end section 122 of a telescopic leg projecting radially therefrom. As can be seen from Figure 10, the leg section 122 is hollow and has a female screw thread which is engaged by a male screw thread on a second leg section 124 which has a spherical foot 126 on its outer end.

As can be seen from Figure 10, this arrangement enables the base member 110 to be positioned on a vehicle seat so that the central portion 112 abuts against the backrest 128 thereof while the end portions 114 and 116 rest on the seat cushion 130 of the vehicle seat with the leg 122, 124 extending downwardly towards the vehicle floor 132.

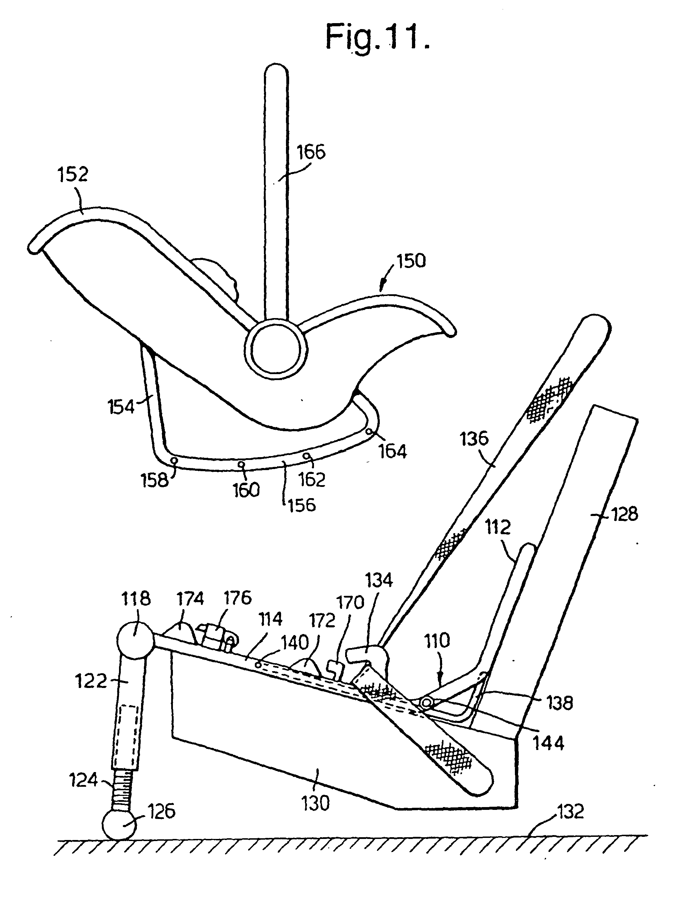

Each of the side limbs 114 and 116 has a respective belt guide 134, in the form of a forward-facing hook. During installation, both the lap and shoulder portions of an adult seat belt 136 for the vehicle seat 128, 130 are engaged round the belt guides 134 as shown in Figure 10. Next, a U-shaped strap deflecting member 138, which has its ends pivotally engaging in holes 140 and 142 in the side limbs 114 and 116 of the base member, is pivoted downwardly from the position shown in Figure 10 to the position shown in Figure 11 in which it deflects the adult seat belt 136 downwardly between the belt guides 134, thereby tightening the belt 136 and compressing the springs of the seat cushion 130 of the vehicle seat. The deflection member 138 is held in the position shown in Figures 9 and 11 (in which it lies substantially parallel to the limbs 114 and 116 of the base member) by spring-loaded detents 144 and 146 on the base member 110 adjacent to the junctions between the central portion 112 and the end portions 114 and 116 respectively. Next, the lower portion 124 of the leg is screwed outwardly from the upper portion 122 so as to bring the foot 126 into engagement with the vehicle floor 132, as shown in Figure 11. The base member 110 is now firmly secured in place on the vehicle seat 128, 130.

Figure 11 also shows a child seat assembly 150, consisting of a plastics seat shell 152 which is mounted on a tubular support frame 154 including two mutually parallel arcuate portions 156 (only one of which is visible in the drawing). Each arcuate portion 156 carries two laterally projecting front studs 158 and 160 and two laterally projecting rear studs 162 and 164. The studs on the arcuate portion 156 are not visible in Figure 11 but are aligned with the corresponding studs which are illustrated and project outwardly from the other side of the seat. The seat assembly 150 also has a carry handle 166 which is pivotally mounted on the seat shell 152 in a conventional manner (not described in detail).

In front of each of the belt guides 134, the limbs 114 and 116 have respective forward-facing hook formations 170 under which either the rear studs 162 or the rear studs 164 can engage. Ramps 172 are provided in front of the hook formations 170 in order to guide these studs into engagement. Each side limb 114, 116 also has a respective ramp 174, similar to the ramps 172 but positioned so as to be engaged by the front studs 158 when the rear studs 162 are engaged by the ramps 172, and by the front studs 160 when the rear studs 164 are engaged by the ramps 172. Behind each of the front ramps 174 is a respective spring-loaded detent assembly 176 arranged to snap into engagement to retain one or other of the front studs 158, 160 when such stud is pressed downwards into engagement. Manually operable release means (not shown) are provided to effect disengagement of the two detent assemblies 176 when it is desired to remove the seat assembly 150 from the base member 110.

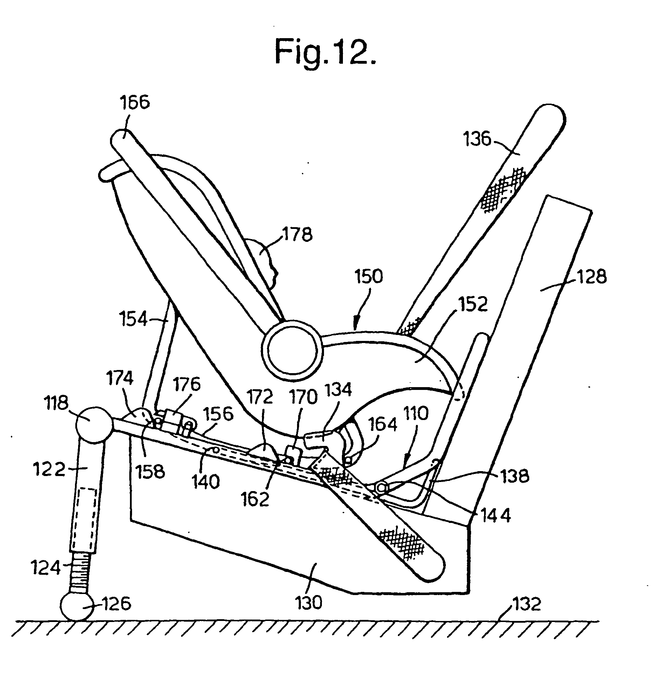

Figure 12 shows the seat assembly 150 positioned on the base member 110 with the front studs 158 engaged by the detent assemblies 176 and the rear studs 162 engaged by the hook formations 170. The seat assembly 150 is oriented so as to support the spine of a newborn child 178 at approximately 40° to the vertical (i.e. the perpendicular to the vehicle floor 132). As can be seen from Figure 12, the child's feet are entirely within the bounds of the seat shell 152.

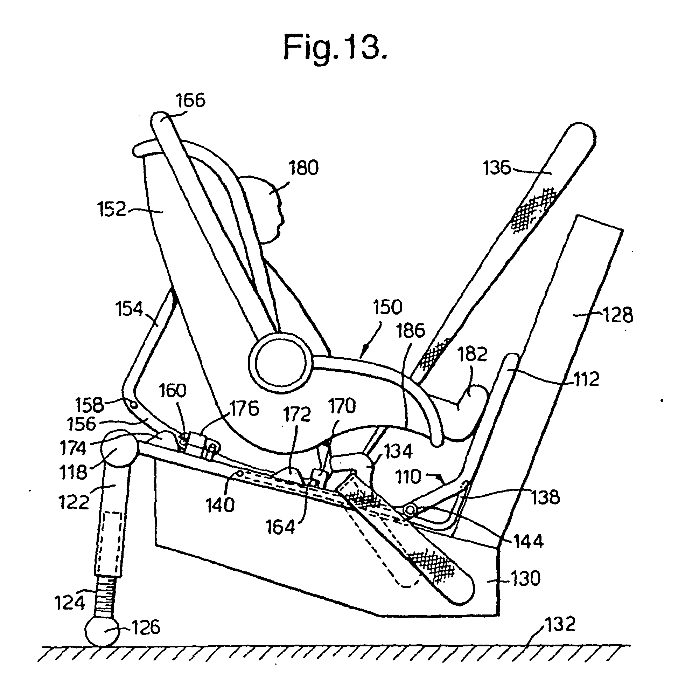

Figure 13 illustrates the seat assembly 150 installed on the base frame 110 in an orientation suitable for use by a child 180 of approximately nine months of age. The rear studs 164 on the frame 154 engage under the hook formations 170 and the front studs 160 are engaged by the detent assemblies 176, with the result that the child 180 is supported with its spine at approximately 27° to the vertical (i.e. the perpendicular to the vehicle floor 132). The child's feet 182 project from the seat shell 152 but do not reach as far as the seat back 128 of the vehicle seat.

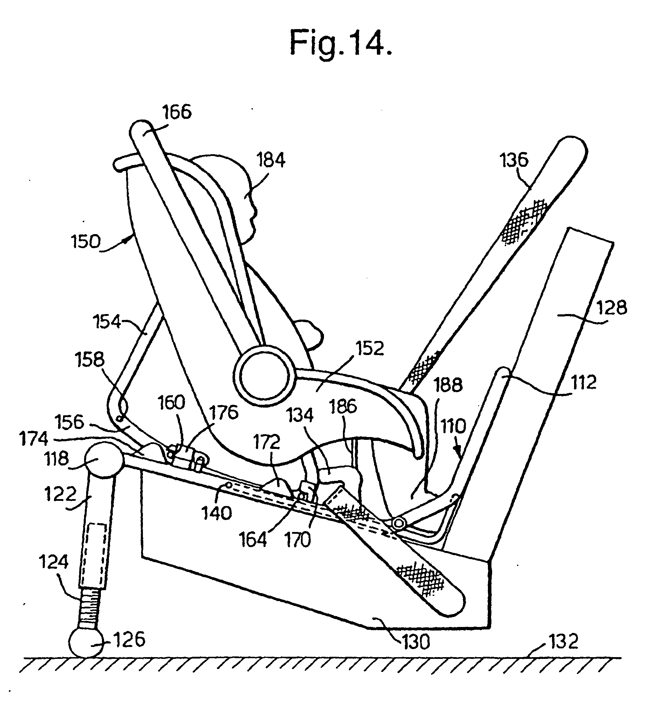

Referring the Figure 14, in order to accommodate an older child 184 (of about eighteen months of age) the front portion of the base part of the seat shell 152 is formed by a flap 186 which is hinged along its rear edge and which can be lowered to an approximately vertical position, allowing the child 184 to bend its knees so that its feet 188 are accommodated in the space between the bottom of the seat shell 152 and the base frame 110.

## Claims

1. A child safety seat for use in a vehicle, comprising a base member (10, 70, 110) adapted to rest on a vehicle seat, a seat assembly (18, 72, 150) mounted on the base member (10, 70, 110), and first and second guide means (34, 36; 77, 78; 134) on the child seat defining a strap path for a strap (52, 54; 136) of a vehicle seat belt to secure the child seat to a vehicle seat, **characterised by** strap deflecting means (42, 44; 77, 78, 88, 90; 134, 138) mounted on the base member (10, 70, 110) for movement between a first position clear of said strap path between said first and second guide means (34, 36; 77, 78; 134) and a second position in which a strap (52, 54, 136) following said strap path is deflected therefrom, thereby to tighten said strap (52, 54; 136), and manually engageable latch means (60, 96, 98, 144, 146) for holding the strap deflecting means in its second position, the strap deflecting means (42, 44; 77, 78, 88, 90; 134, 138) being movable separately from at least part of the seat assembly (18, 72, 150).

2. A child safety seat according to claim 1, wherein the base member (10, 70, 110) has an upstanding rear portion adapted to abut against the backrest of a vehicle seat.

3. A child safety seat according to claim 2, wherein the guide means comprises a vertically extending edge (34, 36) on the upwardly extending part of the base member (10, 70, 110), the relative positions of the strap deflecting means (42, 44) and said edge (34, 36) being variable between a configuration in which the strap deflecting means (42, 44) is clear of a direct path past said edge (34, 36) and a configuration in which it obstructs said direct path.

4. A child safety seat according to claim 1 or 2, wherein the guide means comprises a vertically extending edge (88, 90) on an upwardly extending part of an intermediate member, the relative positions of the strap deflecting means (77, 78) and said edge (88, 90) being variable between a configuration in which the strap deflecting means (77, 78) is clear of a direct path past said edge (88, 90) and a configuration in which it obstructs said direct path.

5. A child safety seat according to claim 3 or 4, wherein said vertically extending edge comprises one side of a vertically extending elongate opening (34, 36; 88, 90).

6. A child safety seat for use in a vehicle according to any preceding claim, wherein said strap deflecting means (42, 44) is positioned so that angular movement of the seat assembly (18) relative to the base member (10) causes movement of the strap deflecting means (42, 44) between a first position clear of said strap path and a second position in which a strap (52, 54) following said strap path is deflected therefrom, thereby tightening said strap (52, 54).

7. A child safety seat according to claim 6, wherein the seat assembly comprises an intermediate member (16) which includes the strap deflecting means (42, 44), and a seat body (18) which is mounted on the intermediate member for angular movement relative thereto.

8. A child safety seat according to claim 1, wherein the seat assembly (150) is detachably mounted on the base member (110) and the strap deflecting means (138) is movable between its first and second positions prior to mounting the seat assembly (150) on the base member (110).

9. A child safety seat according to claim 8, wherein the strap deflecting means (138) is adapted, when in its first position, to obstruct mounting the seat assembly (150) on the base member (110).

10. A child safety seat according to any preceding claim, wherein the first guide means (34, 77, 134) is located on one side of the child seat and the second guide means (36, 78, 134) is located on a side of the child seat opposite to the first guide means (34, 77, 134).

## Patentansprüche

1. Sicherheitssitz für Kinder zur Verwendung in einem Fahrzeug, umfassend ein Grundelement (10, 70, 110), ausgebildet zum Ruhen auf einem Fahrzeugsitz, eine Sitzanordnung (18, 72, 150), die an dem Grundelement (10, 70, 110) gelagert ist, eine erste und eine zweite Führungseinrichtung (34, 36; 77, 78; 134) an dem Kindersitz zum Definieren eines Gurtwegs für einen Gurt (52, 54; 136) eines Fahrzeugsicherheitsgurts zum Sichern des Kindersitzes an einem Fahrzeugsitz, **gekennzeichnet durch** eine Gurtablenkeinrichtung (42, 44; 77, 78, 88, 90; 134, 138) an dem Grundelement (10, 70, 110) für eine Bewegung zwischen einer ersten Stellung abgerückt von dem Gurtweg zwischen der ersten und der zweiten Führungseinrichtung (34, 36; 77, 78; 134), und einer zweiten Stellung, in der ein dem Gurtweg folgender Gurt (52, 54, 136) von ihr abgelenkt wird, um den Gurt (52, 54; 136) strammzuziehen, und eine manuell verschließbare Verriegelungseinrichtung (60, 96, 98, 144, 146) zum Halten der Gurtablenkungseinrichtung in ihrer zweiten Stellung, wobei die Gurtablenkungseinrichtung (42, 44; 77, 78, 88, 90; 134, 138) getrennt von wenigstens einem Teil der Sitzanordnung (18, 72, 150) bewegbar ist.

2. Sicherheitssitz für Kinder nach Anspruch 1, bei dem das Grundelement (10, 70, 110) einen aufrechten Rückenteil besitzt, ausgebildet zur Anlage an der Rückenlehne eines Fahrzeugsitzes.

3. Sicherheitssitz für Kinder nach Anspruch 2, bei dem die Führungseinrichtung einen vertikal verlaufenden Rand (34, 36) an dem nach oben verlaufenden Teil des Grundelements (10, 70, 110) aufweist, wobei die relativen Stellungen der Gurtablenkeinrichtung (42; 44) und des Randes (34, 36) veränderlich sind zwischen einer Konfiguration, in der die Gurtablenkeinrichtung (42, 44) von einem direkten Weg an dem Rand (34, 36) vorbei abgerückt ist, und einer Konfiguration, in der sie den direkten Weg versperrt.

4. Sicherheitssitz für Kinder nach Anspruch 1 oder 2, bei dem die Führungseinrichtung einen vertikal verlaufenden Rand (88, 90) an einem nach oben verlaufenden Teil eines Zwischenelements aufweist, wobei die relativen Positionen der Gurtablenkeinrichtung (77, 78) und des Randes (88, 90) veränderlich sind zwischen einer Konfiguration, in der die Gurtablenkeinrichtung (77, 78) von einem direkten Weg an dem Rand (88, 90) vorbei abgerückt ist, und einer Konfiguration, in der sie den direkten Weg versperrt.

5. Sicherheitssitz für Kinder nach Anspruch 3 oder 4, bei dem der vertikal verlaufende Rand eine Seite einer sich vertikal erstreckenden Längsöffnung (34, 36; 88, 90) aufweist.

6. Sicherheitssitz für Kinder zur Verwendung in einem Fahrzeug nach einem vorhergehenden Anspruch, bei dem die Gurtablenkeinrichtung (42, 44) derart positioniert ist, dass eine Winkelbewegung der Sitzanordnung (18) relativ zu dem Grundelement (10) eine Bewegung der Gurtablenkeinrichtung (42, 44) zwischen einer ersten Stellung abgerückt von dem Gurtweg und einer zweiten Stellung, in der ein dem Gurtweg folgender Gurt (52, 54) aus diesem abgelenkt wird, veranlasst, um **dadurch** den Gurt (52, 54) strammzuziehen.

7. Sicherheitssitz für Kinder nach Anspruch 6, bei dem die Sitzanordnung ein Zwischenelement (16) aufweist, welches die Gurtablenkeinrichtung (42, 44) enthält, und einen Sitzkörper (18), der an dem Zwischenelement für eine Winkelbewegung relativ zu diesem gelagert ist.

8. Sicherheitssitz für Kinder nach Anspruch 1, bei dem die Sitzanordnung (150) lösbar an dem Grundelement (110) gelagert ist und die Gurtablenkeinrichtung (138) bewegbar ist zwischen ihrer ersten und zweiten Position, bevor die Sitzanordnung (150) an dem Grundelement (110) gelagert wird.

9. Sicherheitssitz für Kinder nach Anspruch 8, bei dem die Gurtablenkeinrichtung (138) in ihrer ersten Position dazu ausgebildet ist, das Lagern der Sitzanordnung (150) an dem Grundelement (110) zu verhindern.

10. Sicherheitssitz für Kinder nach einem vorhergehenden Anspruch, bei dem die erste Führungseinrichtung (34, 77, 134) auf einer Seite des Kindersitzes angeordnet ist und die zweite Führungseinrichtung (36, 78, 134) auf einer Seite des Kindersitzes gegenüber der ersten Führungseinrichtung (34, 77, 134) angeordnet ist.

## Revendications

1. Siège de sécurité pour enfant destiné à être utilisé dans un véhicule, comprenant un élément de base (10, 70, 110) adapté pour être en appui sur un siège de véhicule, un ensemble de siège (18, 72, 150) monté sur l'élément de base (10, 70, 110) et des premiers et seconds moyens de guidage (34, 36; 77, 78; 134) sur le siège pour enfant, définissant un trajet pour une sangle (52, 54; 136) d'une ceinture de siège de véhicule pour fixer le siège de l'enfant à un siège du véhicule, **caractérisé par** des moyens (42, 44; 77, 78, 88, 90; 134, 138) de déviation de sangle qui sont montés sur l'élément de base (10, 70, 110) de façon à se déplacer entre une première position écartée du trajet de sangle entre lesdits premiers et seconds moyens de guidage (34, 36; 77, 78; 134) et une seconde position dans laquelle une sangle (52, 54; 136) qui suit ledit trajet de sangle est déviée à partir de ce trajet, de manière que ladite sangle (52, 54; 136) soit tendue, et des moyens à enclenchement (60, 96, 98, 144, 146) actionnables manuellement pour retenir les moyens de déviation de sangle dans leur seconde position, les moyens de déviation de sangle (42, 44; 77, 78, 88, 90; 134, 138) étant mobiles séparément par rapport à au moins une partie de l'ensemble de siège (18, 72, 150).

2. Siège de sécurité pour enfant selon la revendication 1, dans lequel l'élément de base (10, 70, 110) possède une partie arrière montante adaptée pour venir en butée contre le dossier d'un siège de véhicule.

3. Siège de sécurité pour enfant selon la revendication 2, dans lequel les moyens de guidage comprennent un bord (34, 36) qui s'étend verticalement sur la partie, qui s'étend vers le haut, de l'élément de base (10, 70, 110), les positions relatives des moyens (42, 44) de déviation de sangle et dudit bord (34, 36) étant variables entre une configuration dans laquelle les moyens (42, 44) de déviation de sangle sont écartés d'un trajet direct devant ledit bord (34, 36) et une configuration dans laquelle ces moyens obstruent ledit trajet direct.

4. Siège de sécurité pour enfant selon la revendication 1 ou 2, dans lequel les moyens de guidage comprennent un bord (88, 90) qui s'étend verticalement sur une partie, qui s'étend vers le haut, d'un élément intermédiaire, les positions relatives des moyens (77, 78) de déviation de sangle et dudit bord (88, 90) étant variables entre une configuration dans laquelle les moyens (77, 78) de déviation de la bande sont écartés d'un trajet direct devant ledit bord (88, 90) et une configuration dans laquelle ils obstruent ledit trajet direct.

5. Siège de sécurité pour enfant selon la revendication 3 ou 4, dans lequel ledit bord, qui s'étend verticalement, comprend un côté d'une ouverture allongée (34, 36; 88, 90) qui s'étend verticalement.

6. Siège de sécurité pour enfant destiné à être utilisé dans un véhicule selon l'une quelconque des revendications précédentes, dans lequel lesdits moyens (42, 44) de déviation de sangle sont positionnés de telle sorte qu'un déplacement angulaire de l'ensemble de siège (18) par rapport à l'élément de base (10) provoque un déplacement des moyens (42, 44) de déviation de sangle entre une première position dégageant ledit trajet de sangle et une seconde position dans laquelle une sangle (52, 54) qui suit ledit trajet de sangle est déviée par rapport à ce trajet, ce qui provoque la mise en tension de ladite sangle (52, 54).

7. Siège de sécurité pour enfant selon la revendication 6, dans lequel l'ensemble de siège comprend un élément intermédiaire (16), qui inclut les moyens (42, 44) de déviation de sangle, et un corps de siège (18), qui est monté sur l'élément intermédiaire de manière à avoir un déplacement angulaire par rapport à ce dernier.

8. Siège de sécurité pour enfant selon la revendication 1, dans lequel l'ensemble formant siège (150) est monté de façon amovible sur l'élément de base (110), et les moyens (138) de déviation de sangle sont déplaçables entre leurs première et seconde positions avant le montage de l'ensemble de siège (150) sur l'élément de base (110).

9. Siège de sécurité pour enfant selon la revendication 8, dans lequel les moyens (138) de déviation de sangle sont adaptés, lorsqu'ils sont dans leur première position, pour empêcher un montage de l'élément de siège (150) sur l'élément de base (110).

10. Siège de sécurité pour enfant selon l'une des revendications précédentes, dans lequel les premiers moyens de guidage (34, 77, 134) sont situés sur un côté du siège pour enfant et les seconds moyens de guidage (36, 78, 134) sont situés sur un côté du siège pour enfant opposé au premier moyen de guidage (34, 77, 134).
